# EUROPEAN PATENT APPLICATION

(11) **EP 2 487 868 A1**
(43) Date of publication of application: **15.08.2012**
(21) Application number: 11153935.9
(22) Date of filing: 10.02.2011
(51) Int. Cl.: H04L 29/08, H04L 12/56

(54) **An arrangement and method for handling data to and from a processing engine**

(71) Applicant: Telefonaktiebolaget LM Ericsson (publ), 164 83 Stockholm (SE)
(72) Inventor: Gecer, Bulent, 132 43, Saltsjö-Boo (SE); Åström, Bo, 117 59, Stockholm (SE); Lemark, Jan, 112 43, Stockholm (SE)
(74) Representative: Strandin, Heléne

(57) **Abstract**

A data traffic module (100) in a communication network and a method in a data traffic module are provided, for providing data from at least one data source (160) to at least one Complex Event Processing, CEP, engine (150). The data traffic module comprises a first communication unit (110) adapted to receive data from the at least one data source (160) and it also comprises at least one input buffer (140). The data traffic module further comprises a control unit (120) adapted to monitor a work load of the at least one CEP engine (150). When the work load exceeds a preset threshold in relation to a maximum work load, the control unit (120) is adapted to assign the at least one input buffer (140) to the at least one data source (160) wherein the at least one input buffer is adapted to buffer the received data from the at least one data source.

## Description

### Technical field

The invention relates generally to handling data to and from a processing engine. The invention relates in particular to a data traffic module and a method in a data traffic module in a communication network for providing data from at least one data source to at least one Complex Event Processing, CEP, engine and receiving processed data from the CEP engine.

### Background

In today's ever increasing flow of information, it becomes more and more important to provide efficient and secure ways of processing and analyzing data. Many different services require processing and analyzing of large amounts of data and they generate large amounts of data that should or needs to be processed or analyzed.

In order to meet such requirements and demands, Complex Event Processing (CEP) technology is developed for analysis of a continuous stream of data to find patterns and other information that may be extracted from the data. It is used for trading and risk management in the financial industry. Data from many different sources are fed into a CEP engine which can combine the real-time feed of data with historical data. In such a perspective, the CEP engine is a useful tool for data mining, i.e. processing and analysis of data.

However, a CEP engine is not originally developed for communication networks and different requirements are set forth for a CEP engine connected to, or integrated in, a communication network. In a communication network, many different types of data need to be processed and the different types have different characteristics and priorities. The amount of data from the communication network needing to be processed may vary over time. The CEP engine is not designed for these different circumstances and may not operate reliably at all times.

### Summary

It is an object of the exemplifying embodiments to address at least some of the problems outlined above. In particular, it is an object of the exemplifying embodiments to provide efficient and secure processing of data such that a CEP engine being used for processing of data is not overloaded. These objects and others may be obtained by providing a data traffic module and a method in a data traffic module according to the independent claims attached below.

According to an aspect, a data traffic module in a communication network is provided, which module is adapted to provide data from at least one data source to at least one Complex Event Processing, CEP, engine. The data traffic module comprises a first communication unit adapted to receive data from the at least one data source and the data traffic module also comprises at least one input buffer. The data traffic module further comprises a control unit adapted to monitor a work load of the at least one CEP engine. When the work load exceeds a preset threshold in relation to a maximum work load, the control unit is adapted to assign the at least one input buffer to the at least one data source wherein the at least one input buffer is adapted to buffer the received data from the at least one data source.

According to an embodiment, the data traffic module is further adapted to receive processed data from an output of the at least one CEP engine and the data traffic module comprises a second communication unit adapted to provide the received processed data to at least one application. The data traffic module further comprises at least one output buffer, wherein the control unit is further adapted to assign the at least one output buffer to the output of the at least one CEP engine when the at least one application is not able to receive the processed data at the same rate as the processed data is being received by the data traffic module from the at least one CEP engine.

According to an aspect, a method in a data traffic module in a communication network is provided for providing data from at least one data source to at least one Complex Event Processing, CEP, engine. The method comprises receiving data from the at least one data source. The method further comprises monitoring a work load of the at least one CEP engine. When the work load exceeds a preset threshold in relation to a maximum work load for the at least one CEP engine, the method comprises assigning at least one input buffer to the at least one data source for buffering the received data from the at least one data source.

According to an embodiment, processed data is received from the at least one CEP engine and provided to at least one application. The method further comprises buffering the processed data in at least one output buffer when the at least one application is not able to receive the processed data at the same rate as the processed data is being received by the data traffic module from the at least one CEP engine.

The data traffic module and the method in a data traffic module have the advantage that the incoming data from the data source(s) is not discarded by the CEP engine in case of a possible work overload, but instead buffered in the input buffer until the CEP engine is able or ready to process the data from the data source(s).

Another advantage is that any CEP engine can be used in the communication network. The data traffic module will prevent unwanted loss of data due to a work overload of the CEP engine. In other words, the CEP engine will not have to be updated or modified, at least not to a large extent, in order to be used in the communication network.

A further advantage is that processed data will not be discarded by the CEP engine due to the CEP engine not being able to output data at the rate needed in order to not overload the CEP engine.

### Brief description of drawings

The invention will now be described in more detail by means of exemplary embodiments and with reference to the accompanying drawings, in which:

Figure 1 is a block diagram illustrating a logical representation of an exemplifying embodiment of a data traffic module for providing data from a data source to a CEP engine.

Figure 2 is a flow chart illustrating an exemplifying embodiment of a method in a data traffic module for providing data from a data source to a CEP engine.

### Detailed description

In the following, a detailed description of embodiments of a data traffic module, and a method in a data traffic module, for providing data from a data source to a CEP engine and for providing processed data from a CEP engine to an application will be described.

As stated above, a CEP engine may be a useful tool for data mining as it can handle a large amount of data coming into the CEP engine in one or more data streams. However, should the CEP engine become overloaded it may start discarding incoming data. The overload can result from the amount of incoming traffic reaching levels which exceed the processing capabilities of the CEP engine. Another reason for overload can be that the CEP engine is not able to output data, which has been processed, at the same speed as the CEP engine processes the incoming data. This can be the case if e.g. an application which is the recipient of the processed data from the CEP engine may not receive the data at the same speed as the CEP engine generates processed data, In such a case the CEP engine may start discarding data.

The discarding of data may be of different severities depending on the type of data or the application for which the data concerns. If the data in question is Call Data Records which is used for billing purposes, it is important that such data should not be lost.

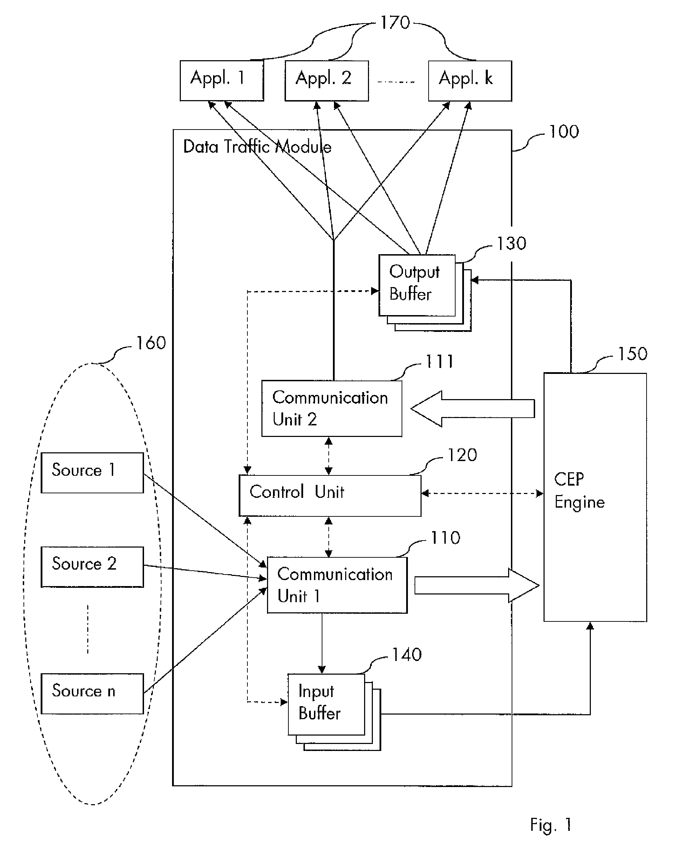

An exemplifying embodiment of a data traffic module for controlling traffic to and from a CEP engine will now be described with reference to figure 1.

Figure 1 is a block diagram illustrating a logical representation of an exemplifying embodiment of a data traffic module for providing data from at least one data source to at least one CEP engine.

Figure 1 discloses a data traffic module 100 in a communication network adapted to provide data from at least one data source 160 to at least one CEP engine 150. The data traffic module comprises a first communication unit 110 adapted to receive data from the at least one data source 160. The data traffic module also comprises at least one input buffer 140 and a control unit 120. The control unit is adapted to monitor a work load of the at least one CEP engine and when the work load exceeds a preset threshold in relation to a maximum work load, the control unit is adapted to assign the at least one input buffer 140 to the at least one data source 160. The at least one input buffer 140 is adapted to buffer the received data from the at least one data source 160.

When the work load of the CEP engine 150 is below the preset threshold, the first communication unit 110 is adapted to provide the incoming data from the data source(s) to the CEP engine(s). This is illustrated in figure 1 by the big arrow from the first communication unit to the CEP engine. When the work load of the CEP engine reaches the preset threshold, the control unit 120 is adapted to assign the at least one input buffer 140 to the data source(s) 160. This is illustrated in figure 1 by the dotted arrows. The data from the data source(s) is then buffered in the input buffer 140, which is illustrated in figure 1 by the thin arrow from the first communication unit 110 to the input buffer 140.

This has the advantage that the incoming data from the data source(s) is not discarded by the CEP engine but instead buffered in the input buffer until the CEP engine is able or ready to process the data from the data source(s).

Another advantage is that any CEP engine can be used in the communication network. The data traffic module will prevent unwanted loss of data due to a work overload of the CEP engine.

Figure 1 further discloses an exemplifying embodiment of the data traffic module being adapted to receive processed data from an output of the at least one CEP engine 150. In this embodiment, the data traffic module comprises a second communication unit 111 adapted to provide the received processed data to at least one application 170. The data traffic module further comprises at least one output buffer 130, wherein the control unit 120 is further adapted to assign the at least one output buffer 130 to the output of the at least one CEP engine 150 when the application(s) 170 is/are not able to receive the processed data at the same rate as the processed data is being received by the data traffic module 100 from the at least one CEP engine 150.

When the application(s) 170 can receive processed data from the CEP engine 150 at the same rate or speed as the processed data is outputted from the CEP engine 150, which is the same as the rate or speed with which the processed data is received by the data traffic module, then the processed data is received in the data traffic module by the second communication unit. This is illustrated in figure 1 by the big arrow from the CEP engine 150 to the second communication unit 111. Then the processed data is provided to the application(s) 170 which is illustrated by the thin lines between the second communication unit 111 and the application(s) 170. In case the application(s) 170 cannot receive the processed data at the same rate as the processed data is being received by the data traffic module 100 from the at least one CEP engine 150, then the control unit is adapted to assign an output buffer to the output of the CEP engine. This is illustrated in figure 1 by the dotted arrows. The buffering of the processed data from the CEP engine 150 in the output buffer is illustrated in figure 1 by the thin arrow from the CEP engine 150 to the output buffer 130.

This has the advantage that processed data will not be discarded by the CEP engine due to the CEP engine not being able to output data at the rate needed in order to not overload the CEP engine.

The reason why the application(s) may not be able to receive the processed data at the same rate as the processed data is being outputted from the CEP engine may be e.g. a temporary overload in the application(s) or congestion in the network or link(s) towards the application(s).

In an example, the control unit 120 is arranged to receive an alarm from an application 170 indicating that the application is suffering from overload or is for some other reason not able to receive data at the same rate as the data is provided to the application 170.

In yet an example, the control unit 120 is arranged to derive from a protocol of an application 170 that the application is overloaded or running a risk of becoming overloaded. For example, if the application has a maximum capacity of receiving data at a certain maximum rate and the processed data which is received by the data traffic module from the CEP engine destined for the application is received at an even higher rate, then the control unit is adapted to assign an output buffer to the output of the CEP engine.

In still an example, the control unit 120 is arranged to request acknowledgements for the processed data being provided to the application 170.In case an acknowledgement is not received, the control unit 120 is arranged to assign an output buffer to the output of the CEP engine.

According to an embodiment, the control unit 120 is adapted to monitor the work load of the at least one CEP engine 150 by means of monitoring the type and the amount of data being provided to the CEP engine(s) or to receive an alarm from the CEP engine(s) 150.

The CEP engine 150 may initiate an alarm when its work load is reaching the preset threshold. Then the control unit 120 may assign an input buffer 140 to the at least one data source 160, such that the data will be buffered in the buffer and not running the risk of being discarded by the CEP engine.

The control unit can also be adapted to monitor the type and amount of data being provided to the CEP engine(s). Certain types of data may require more processing by the CEP engine than other types of data. Further, certain types of data may generate larger amount of processed data than other types of data. By monitoring the type and amount of data being received from the data source(s) 160 and provided to the CEP engine, the control unit is able to estimate the work load of the CEP engine. As describe above, if the control unit estimates that the work load is reaching the preset threshold, the control unit 120 may assign an input buffer 140 to the at least one data source 160, such that the data will be buffered in the input buffer, hence not running the risk of being discarded by the CEP engine.

In yet an example, the control unit 120 is adapted to monitor the work load of the at least one CEP engine 150 by means of polling a load of a CPU of the CEP engine(s) or usage level of buffers comprised in the at least one CEP engine.

This is another way for the control unit to monitor the work load of the CEP engine. There may be a threshold for the usage levels of the buffers of the CEP engine(s) and another threshold for the load of the CPU. Or there may be one threshold comprising both parameters. Merely as an example, if the usage level of the buffers of the CEP engine(s) is e.g. 80%, then there might be a risk that the buffers soon will fill up and the CEP engine may possible start discarding data. In such a case, the control unit assigns an input buffer 140 to the at least one data source 160, such that the data will be buffered in the buffer, hence not running the risk of being discarded by the CEP engine.

According to an embodiment, the data traffic module comprises at least two input buffers 140, wherein the input buffers are assigned different characteristics, such as priority of buffered data, no loss of buffered data, partial discarding of buffered data after expiry of a timer.

As was discussed above, certain data should never be lost, such as charging or billing data. Other types of data, such as e.g. presence data may become irrelevant relatively quickly and the occasional loss of such data may be acceptable. Also, some data are more critical to be processed immediately whereas some data can wait for later processing.

In this embodiment, the buffers are defined for a particular CEP Quality of Service (QoS) where parameters such as priority, time-to-leave for buffered data and data-loss-acceptance level govern the choice of buffer(s).

This also means that different data sources 160 may be assigned the same or different buffers depending on the data with is delivered or provided by the data sources 160.

Just as an example, assume the data traffic module disposes of three input buffers 140. Buffer 1 is used for high priority traffic/data with high requirements on low latency, where data must not be stored longer in the buffer than a certain predefined Time-To-Leave (TTL) value. Buffer 2 is used for traffic/data that may not be lost but with low latency requirements, i.e. data may be stored for longer periods in the buffer. Buffer 3 is used for traffic/data where parts of the buffered data may be discarded after a predefined TTL value. In case the work load of the CEP engine exceeds the preset threshold and there is a plurality of data sources sending data towards the CEP engine through the data traffic module, the three different buffers will be assigned to the plurality of data sources. Depending on the different types of data that is being sent from the respective data sources, the three buffers will be assigned to the respective data sources in accordance to the types of data and the corresponding CEP QoS characteristics of the three buffers.

According to an embodiment, the data traffic module comprises at least two output buffers 130, wherein the output buffers are assigned different characteristics, such as priority of buffered data, no loss of buffered data, partial discarding of buffered data after expiry of a timer.

Also processed data outputted from the CEP engine may have different characteristics in the same manner as for incoming data from the data source(s). By having at least two buffers and assigning them different characteristics, also processed data can be buffered in accordance with different CEP QoS requirements.

In an example, the control unit 120 is adapted to start a timer when inserting data which is only relevant for a limited period of time into a buffer. The control unit is further adapted to discard the inserted data when the timer expires.

As was previously discussed, certain data may become less relevant in time or may become irrelevant after a certain time. E.g. presence data may only be of interest in real time for providing a special kind of service relating to the location of a user. When data having such characteristics that it may only relevant for a limited period of time is received from a data source 160 and the work load of the CEP engine has reached the threshold, the control unit starts a timer and assigns an appropriate buffer to the data source which is transmitting the data. If the data is still in the buffer after the expiration of the timer, then the data is discarded. This has the advantage that a buffer will not risk being filled up with data which has become irrelevant. It also saves processing capacity as the discarded data will never be provided to the CEP engine, thereby avoiding processing of data which has become irrelevant.

According to an embodiment, the control unit 120 is adapted to provide data from the at least one input buffer 140 to the at least one CEP engine 150 when the work load of the CEP engine decreases.

As was described above, the control unit monitors the work load of the CEP engine(s). When the work load decreases after a peak where it exceeded the preset threshold, the CEP engine(s) may again be able to receive and process more data. Then the control unit is adapted to provide data to the CEP engine from the input buffer(s).

In case there are at least two input buffers having different characteristics, then the control unit is in an example adapted to select the buffer having the highest QoS. This ensures that data having e.g. strict requirements of low latency will be firstly provided to the CEP engine before data having less strict requirements of low latency,

In yet an example, in case a buffer having very strict requirements of no-data loss is starting to fill up, the control unit is adapted to select this buffer first in order to ensure that important data is not lost due to a full buffer, when the work load of the CEP engine(s) fall below the preset threshold,

The control unit is also adapted to compare the incoming data from the data source(s) to the data buffered in the input buffer(s) when the work load of the CEP engine falls below the preset threshold, from previously having exceeded the threshold. Should the input buffer(s) comprise data with high latency and the data being received from the data source(s) have low latency and no-data-loss, the data from the data source(s) is provided to the CEP engine first before data from the input buffer(s), in case not all data can simultaneously be provided to the CEP engine(s). Should the data comprised in the input buffer(s) have low latency and the data being received from the data sources have high latency, then the data comprised in the input buffer(s) is first provided to the CEP engine and the data from the data source(s) will be buffered in the input buffer(s), in case not all data can simultaneously be provided to the CEP engine(s).

In yet an example, a second threshold is provided which is lower than the above mentioned threshold, which will in this example be referred to as the first threshold. If the work load of the CEP engine has reached the first threshold, then in this example, the control unit is adapted to assign an input buffer or buffers to the data source(s) until the work load of the CEP engine has fallen to the second threshold. This allows for the work load of the CEP engine to fall down to a level corresponding to the second threshold which is lower than the first threshold until the control unit provides data from the input buffer(s) and/or the data source(s) to the CEP engine.

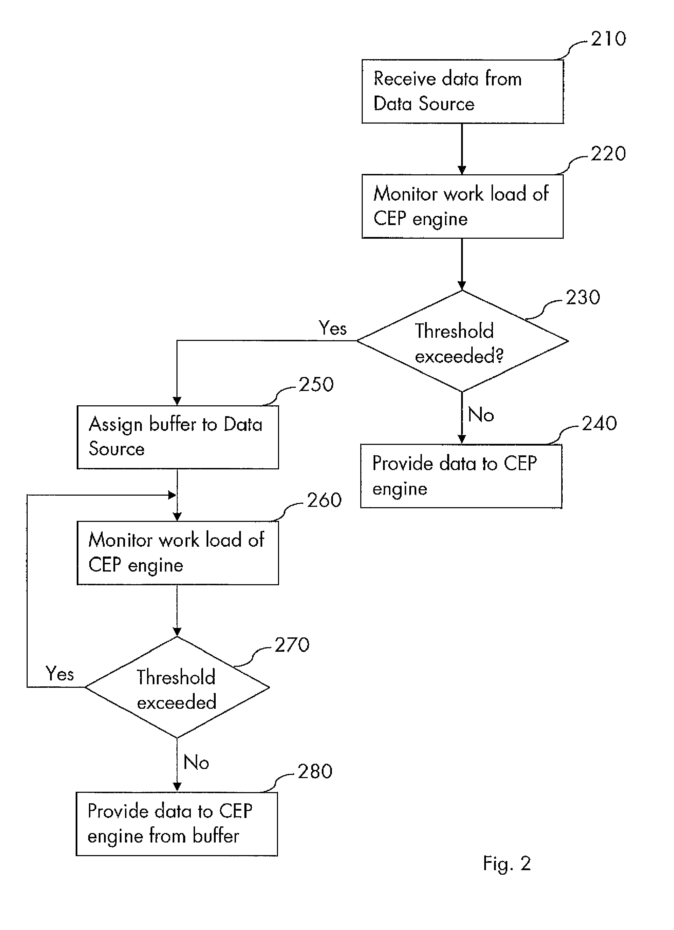

Figure 2 is a flow chart illustrating an exemplifying embodiment of a method in a data traffic module for providing data from a data source to a CEP engine.

The method has the same objects and advantages as the data traffic module. For sake of simplicity, the method will only be briefly described.

Figure 3 shows the method in a data traffic module in a communication network for providing data from at least one data source to at least one CEP engine comprising receiving 210 data from the at least one data source. The method also comprises monitoring 220 a work load of the at least one CEP engine. When the work load exceeds a preset threshold in relation to a maximum work load for the at least one CEP engine, assigning 250 at least one input buffer to the at least one data source for buffering the received data from the at least one data source.

In figure 2, it is illustrated that the current work load is compared to a preset threshold by box 230. This monitoring is in one example continuous. In another example, the monitoring is done by checking the current work load against the preset threshold at regular intervals, e.g. once every second.

Figure 2 also illustrates that in case the work load has not reached the preset threshold, the data is provided 240 to the CEP engine.

In an example, the method further comprises receiving processed data from the at least one CEP engine and providing it to at least one application. The method further comprising buffering the processed data in at least one output buffer when the at least one application is not able to receive the processed data at the same rate as the processed data is being received by the data traffic module from the at least one CEP engine.

In case an application(s) which is the recipient of the processed data has a temporary overload or if there is a congestion in the network or link(s) towards the application(s), the processed data from the CEP engine is buffered.

According to an exemplifying embodiment, the work load of said at least one CEP engine is monitored by means of monitoring the type and the amount of data being provided to the at least one CEP engine or an alarm is received from the at least one CEP engine.

According to yet an exemplifying embodiment, the work load of the at least one CEP engine is monitored by means of polling a load of a CPU of the CEP engine or usage level of buffers comprised in the at least one CEP engine.

This can be performed by making a system call to the CEP to enquire about its status.

In an example, the data traffic module comprises at least two input buffers and the method comprises assigning different characteristics to the input buffers, such as priority of buffered data, no loss of buffered data, partial discarding of buffered data after expiry of a timer.

In yet an example, the data traffic module comprises at least two output buffers and the method comprises assigning different characteristics to the output buffers, such as priority of buffered data, no loss of buffered data, partial discarding of buffered data after expiry of a timer.

In an example, the method comprises starting a timer when data which is only relevant for a limited period of time is inserted into a buffer and wherein the inserted data is discarded when the timer expires.

According to an embodiment, the method comprises providing 280 data from the at least one input buffer to the at least one CEP engine when the work load decreases.

This is illustrated in figure 2 as the method comprising checking 270 the work load of the CEP engine against the preset threshold and if the threshold is not exceeded, then data is provided to the CEP engine from the input buffer(s).

Figure 2 is merely a logical illustration of the method. Therefore, the checking of the work load of the CEP engine against the present threshold is not two separate processes 230 and 270. The work load of the CEP engine is monitored, and if it exceeds a threshold, then incoming data from the data source(s) is buffered in the input buffer(s). When the work load of the CEP engine decreases such that data may again be provided to the CEP engine then data from either the data source(s) or data from the input buffer(s) or a combination of both is provided to the CEP engine for processing.

Buffers may be implemented by using distributed file systems, internal or external databases or a combination of the two.

In an example, the CEP QoS are defined directly in the data traffic module via Configuration Management (OAM) for incoming and outgoing traffic, or, in another example, via interfaces towards the applications utilizing the CEP engine(s).

It should be noted that figure 1 merely illustrates various functional units in the data traffic module in a logical sense. The functions in practice may be implemented using any suitable software and hardware means/circuits etc. Thus, the invention is generally not limited to the shown structures of the data traffic module and the functional units. Hence, the previously described exemplary embodiments may be realised in many ways. For example, one embodiment of the present invention includes a computer-readable medium having instructions stored thereon that are executable by the data traffic module for providing data from at least one data source to at least one CEP engine. The instructions executable by the computing system and stored on the computer-readable medium perform the method steps of the present invention as set forth in the claims.

While the invention has been described in terms of several embodiments, it is contemplated that alternatives, modifications, permutations and equivalents thereof will become apparent upon reading of the specifications and study of the drawings. It is therefore intended that the following appended claims include such alternatives, modifications, permutations and equivalents as fall within the scope of the present invention and defined by the pending claims.

## Claims

1. A data traffic module (100) in a communication network adapted to provide data from at least one data source (160) to at least one Complex Event Processing, CEP, engine (150), the data traffic module comprising:
- a first communication unit (110) adapted to receive data from said at least one data source (160),
- at least one input buffer (140), and
- a control unit (120) adapted to monitor a work load of said at least one CEP engine and wherein when said work load exceeds a preset threshold in relation to a maximum work load, said control unit is adapted to assign said at least one input buffer (140) to said at least one data source (160) wherein said at least one input buffer (140) is adapted to buffer said received data from said at least one data source (160).

2. A data traffic module (100) according to claim 1, further being adapted to receive processed data from an output of said at least one CEP engine (150) and comprising a second communication unit (111) adapted to provide said received processed data to at least one application (170), said data traffic module further comprising at least one output buffer (130), wherein said control unit (120) is further adapted to assign said at least one output buffer (130) to said output of said at least one CEP engine (150) when said at least one application is not able to receive said processed data at the same rate as said processed data is being received by said data traffic module (100) from said at least one CEP engine (150).

3. A data traffic module (100) according to claim 1 or 2, wherein said control unit (120) is adapted to monitor said work load of said at least one CEP engine (150) by means of monitoring the type and the amount of data being provided to said at least one CEP engine or to receive an alarm from said at least one CEP engine (150).

4. A data traffic module (100) according to any of claims 1-3, wherein said control unit (120) is adapted to monitor said work load of said at least one CEP engine (150) by means of polling a load of a CPU of said CEP engine or usage level of buffers comprised in said at least one CEP engine.

5. A data traffic module (100) according to any of claims 1-4, comprising at least two input buffers (140), wherein said input buffers are assigned different characteristics, such as priority of buffered data, no loss of buffered data, partial discarding of buffered data after expiry of a timer.

6. A data traffic module (100) according to any of claims 1-5, comprising at least two output buffers (130), wherein said output buffers are assigned different characteristics , such as priority of buffered data, no loss of buffered data, partial discarding of buffered data after expiry of a timer.

7. A data traffic module (100) according to claim 5 or 6, wherein said control unit (120) is adapted to start a timer when inserting data which is only relevant for a limited period of time into a buffer, wherein said control unit is further adapted to discard said inserted data when said timer expires.

8. A data traffic module (100) according to any of claims 1-7, wherein said control unit (120) is adapted to provide data from said at least one input buffer (140) to said at least one CEP engine (150) when said work load decreases.

9. A method in a data traffic module in a communication network for providing data from at least one data source to at least one Complex Event Processing, CEP, engine, the method comprising:
- receiving (210) data from said at least one data source, and
- monitoring (220) a work load of said at least one CEP engine and wherein when said work load exceeds a preset threshold in relation to a maximum work load for said at least one CEP engine, assigning (250) at least one input buffer to said at least one data source for buffering said received data from said at least one data source.

10. A method according to claim 9, wherein processed data is received from said at least one CEP engine and provided to at least one application, said method further comprising buffering said processed data in at least one output buffer when said at least one application is not able to receive said processed data at the same rate as said processed data is being received by said data traffic module from said at least one CEP engine.

11. A method according to claim 9 or 10, wherein said work load of said at least one CEP engine is monitored by means of monitoring the type and the amount of data being provided to said at least one CEP engine or an alarm is received from said at least one CEP engine.

12. A method according to any of claim 9-11, wherein said work load of said at least one CEP engine is monitored by means of polling a load of a CPU of said CEP engine or usage level of buffers comprised in said at least one CEP engine.

13. A method according to any of claim 9-12, wherein said data traffic module comprises at least two input buffers and the method comprises assigning different characteristics to said input buffers, such as priority of buffered data, no loss of buffered data, partial discarding of buffered data after expiry of a timer.

14. A method according to any of claim 9-13, wherein said data traffic module comprises at least two output buffers and the method comprises assigning different characteristics to said output buffers, such as priority of buffered data, no loss of buffered data, partial discarding of buffered data after expiry of a timer.

15. A method according to claim 13 or 14, wherein a timer is started when data which is only relevant for a limited period of time is inserted into a buffer and wherein said inserted data is discarded when said timer expires.

16. A method according to any of claims 9-15, wherein data is provided (280) from said at least one input buffer to said at least one CEP engine when said work load decreases.
